# EUROPÄISCHE PATENTSCHRIFT

(11) **EP 2 664 501 B1**
(45) Veröffentlichungstag und Bekanntmachung des Hinweises auf die Patenterteilung: **08.10.2014**
(21) Anmeldenummer: 13180470.0
(22) Anmeldetag: 06.05.2011
(51) Int. Cl.: B60R 25/00, G07C 9/00

(54) **Verfahren und Vorrichtung zur automatischen Betätigung eines Schließelements eines Fahrzeugs**
Method and device for automatically actuating a locking element of a vehicle
Procédé et dispositif d'actionnement automatique d'un élément de fermeture d'un véhicule

(30) Priorität: 20.05.2010 DE 102010021108
(43) Veröffentlichungstag der Anmeldung: 20.11.2013
(62) Teilanmeldung aus: 11725317.9
(73) Patentinhaber: Volkswagen Aktiengesellschaft, 38440 Wolfsburg (DE)
(72) Erfinder: Wolf, Richard, 04277 Leipzig (DE); Ette, Bernd, 38442 Wolfsburg (DE)

(56) Entgegenhaltungen:
- DE-A1-102004 055 982
- DE-A1-102007 023 140
- US-A1- 2008 296 926

## Beschreibung

Die vorliegende Erfindung betrifft ein Verfahren und eine Vorrichtung, um durch eine Bewegung eines Objektes (beispielsweise die Bewegung eines Fußes) ein Schließelement eines Fahrzeugs zu betätigen.

Die DE 10 2007 023 140 A1 offenbart ein Verfahren zur Identifizierung eines Fahrers eines Kraftfahrzeugs, wobei mittels eines Kamerasystems eine Bewegung und/oder ein Bewegungsablauf des Fahrers aufgenommen wird. Diese aufgenommene Bewegung und/oder dieser aufgenommene Bewegungsablauf wird mit einer abgespeicherten Bewegung bzw. einem abgespeicherten Bewegungsablauf verglichen, um auf einen bekannten Fahrer zurückzuschließen. Dabei kann auch eine neu aufgenommene Bewegung und/oder ein neu aufgenommener Bewegungsablauf zur Verbesserung der Identifizierung abgespeichert werden.

Nach dem Stand der Technik sind Verfahren bekannt, mit welchen beispielsweise eine Tür eines Kraftfahrzeugs durch die Bewegung eines Beins geöffnet werden kann, siehe beispielsweise DE 10 2009 017 404 A1, DE 10 2006 044 112 A1, DE 10 2004 055 982 A1, DE 101 06 400 B4 oder US 2008/0296926 A1. Darüber hinaus ist es aus der DE 10 2007 051 543 A1 bekannt, adaptierbare Parameter für bestimmte Einstellungen, beispielsweise eines Gurtes, eines Sitzes, für ein Fahrzeug abzuspeichern.

Bei einem Einsatz von mittels Gestik gesteuerten Sensoren zum Öffnen und Schließen von Türen und Klappen eines Fahrzeugs werden Bewegungen von Objekten (beispielsweise Händen oder Füßen) ausgewertet. Dabei werden nach dem Stand der Technik die Türen und Klappen nur betätigt, wenn die Bewegung des entsprechenden Objektes von einem Auswertealgorithmus als gültig bewertet wird. Wird die entsprechende Bewegung nicht als gültig bewertet, wird die entsprechende Tür oder Klappe nicht betätigt, auch wenn die Bewegung von einer für das Fahrzeug berechtigten Person ausgeführt wird.

Die vorliegende Erfindung stellt sich die Aufgabe, das Öffnen und Schließen von Türen und Klappen eines Fahrzeugs durch Gesten zu erleichtern.

Erfindungsgemäß wird diese Aufgabe durch ein Verfahren zur automatischen Betätigung eines Schließelements eines Fahrzeugs nach Anspruch 1, durch eine Vorrichtung zur Betätigung eines Schließelements eines Fahrzeugs nach Anspruch 5 und durch ein Fahrzeug nach Anspruch 7 gelöst. Die abhängigen Ansprüche definieren bevorzugte und vorteilhafte Ausführungsformen der vorliegenden Erfindung.

Im Rahmen der vorliegenden Erfindung wird ein Verfahren zur automatischen Betätigung eines Schließelements (z.B. einer Tür oder einer Klappe) eines Fahrzeugs bereitgestellt. Dabei wird eine Bewegung eines Objektes (beispielsweise einer Hand oder eines Fußes, aber auch eines Stocks) in einem bestimmten Umgebungsbereich des Fahrzeugs erfasst. Die erfasste Bewegung wird mit mindestens einem vorgegebenen Bewegungsprofil verglichen, wobei das Schließelement automatisch betätigt wird, wenn die erfasste Bewegung dem mindestens einen Bewegungsprofil entspricht. Wenn die erfasste Bewegung nicht dem mindestens einen vorgegebenen Bewegungsprofil entspricht, wird ausgehend von der erfassten Bewegung ein weiteres vorgegebenes Bewegungsprofil erzeugt.

Mit anderen Worten wird die erfasste Bewegung mit einem oder mit mehreren vorgegebenen Bewegungsprofilen verglichen. Wenn die erfasste Bewegung einem dieser vorgegebenen Bewegungsprofile entspricht, wird das Schließelement automatisch betätigt. Wenn die erfasste Bewegung keinem dieser vorgegebenen Bewegungsprofile entspricht, wird die erfasste Bewegung in ein weiteres Bewegungsprofil umgesetzt und abgespeichert. Wird anschließend eine weitere Bewegung innerhalb einer parametrierbaren Zeitspanne erfasst, welche diesem weiteren Bewegungsprofil entspricht, wird das Schließelement des Fahrzeugs automatisch betätigt.

Dadurch passt sich das erfindungsgemäße Verfahren selbstlernend und adaptiv an die Benutzer des Fahrzeugs an, wodurch die Anzahl der ungültigen Betätigungsversuche gesenkt und die Akzeptanz der entsprechenden Funktion des automatischen Betätigens des Schließelements gesteigert wird. Die vorliegende Erfindung weist dadurch eine Erlernbarkeit der Bewegung des Objektes (z.B. einer Kickbewegung) auf, ohne dass Handbücher gelesen oder Systemeinstellungen vorgenommen werden müssen. Darüber hinaus kann sich das erfindungsgemäße Verfahren an die Form, Größe, Materialeigenschaften (z.B. Farbe) u.s.w. des Objektes anpassen, so dass die Bewegung eines Frauenfußes, eines Herrenfußes oder eines Krückstocks ohne Probleme erfasst wird.

Dabei wird das weitere Bewegungsprofil insbesondere nur dann als vorgegebenes Bewegungsprofil abgespeichert, wenn direkt nach dem Erfassen der Bewegung, welche zur Erzeugung dieses weiteren Bewegungsprofil führte, eine weitere Bewegung erfasst wird, welche in gewissen Toleranzgrenzen diesem weiteren Bewegungsprofil entspricht.

Damit wird sichergestellt, dass vorgegebene Bewegungsprofile nicht auch dann neu erzeugt werden, wenn der berechtigte Benutzer des Fahrzeugs nur zufällig eine nicht seinem Bewegungsprofil entsprechende Bewegung ausgeführt hat, z.B. da der Benutzer nur an dem Schließelement vorbei läuft.

Darüber hinaus sollte das weitere Bewegungsprofil einem vorbestimmten Default-Profil ähnlich sein, um als vorgegebenes Bewegungsprofil abgespeichert zu werden. Damit wird sichergestellt, dass die vorgegebenen Bewegungsprofile einem bestimmten Muster (nämlich dem Default-Profil) entsprechen.

Die Bewegung des Objekts kann dabei mit einem, besser mit mehreren Sensoren des Fahrzeugs erfasst werden. Dabei wird ein zeitlicher Verlauf einer Ausgabe dieses mindestens einen Sensors erfasst und mit den vorgegebenen Bewegungsprofilen verglichen. Die erfasste Bewegung des Objektes entspricht einem vorgegebenen Bewegungsprofil, wenn der zeitliche Verlauf der Sensorausgabe innerhalb von Toleranzgrenzen einer entsprechenden Definition eines zeitlichen Verlaufs dieses Bewegungsprofils entspricht. Dabei kann die Definition des zeitlichen Verlaufs des Bewegungsprofils beispielsweise aus einer Hüllkurve bestehen, in welcher der zeitliche Verlauf der Sensorausgabe zu liegen hat, damit die erfasste Bewegung diesem Bewegungsprofil entspricht. Diese Hüllkurve kann z.B. durch bestimmte Merkmale eines Default-Signalverlaufs definiert werden, wobei diese Merkmale jeweils einen vorbestimmten Wertebereich definieren.

Als Sensor kann dabei ein optischer Sensor, ein kapazitiver Sensor, ein thermischer Sensor, ein Infrarot-Sensor, ein Ultraschall-Sensor oder auch eine Kamera eingesetzt werden. Auch eine Kombination von Sensoren verschiedener Typen ist denkbar.

Gemäß einer bevorzugten erfindungsgemäßen Ausführungsform ist die Anzahl der vorgegebenen Bewegungsprofile begrenzt (beispielsweise kann die Anzahl der Bewegungsprofile der Anzahl der Sitze des Fahrzeugs entsprechen). Dabei wird für jedes Bewegungsprofil die entsprechende Anzahl von erfassten Bewegungen des Objektes gezählt, welche diesem Bewegungsprofil entsprechen. Wird nun ein weiteres Bewegungsprofil erfasst, welches keinem der aktuell gespeicherten vorgegebenen Bewegungsprofile entspricht, wird dasjenige vorgegebene Bewegungsprofil durch das weitere Bewegungsprofil ersetzt, dessen jeweilige Anzahl am kleinsten ist.

Dadurch wird vorteilhafterweise jeweils das am seltensten benutzte (angesprochene) vorgegebene Bewegungsprofil durch das weitere Bewegungsprofil ersetzt.

Im Rahmen der vorliegenden Erfindung wird auch ein weiteres Verfahren zur automatischen Betätigung eines Schließelements eines Fahrzeugs bereitgestellt, bei welchem eine Bewegung eines Objektes in einem Umgebungsbereich des Fahrzeugs mit einem oder mit mehreren Sensoren erfasst wird. Gemäß diesem weiteren erfindungsgemäßen Verfahren wird das Schließelement automatisch betätigt, wenn der zeitliche Verlauf einer Ausgabe des mindestens einen Sensors innerhalb von Toleranzgrenzen einem zeitlichen Verlauf mindestens eines vorgegebenen Bewegungsprofils entspricht.

Indem der zeitliche Verlauf der Ausgabe eines Sensors oder der zeitliche Verlauf der Ausgaben mehrerer Sensoren dahingehend überprüft werden, ob sie einem durch das vorgegebene Bewegungsprofil definierten zeitlichen Verlauf entsprechen, können bestimmte Eigenarten der mittels des mindestens einen Sensors erfassten Bewegung viel besser abgebildet und damit gegenüber den vorgegebenen Bewegungsprofilen überprüft werden, als es nach dem Stand der Technik der Fall ist, bei welchem nur überprüft wird, ob bestimmte Sensoren anschlagen.

Es hat sich dabei insbesondere als sinnvoll erwiesen, dass jedes vorgegebene Bewegungsprofil eine erste Bewegung des Objektes in eine vorbestimmte Richtung und eine zweite Bewegung des Objektes in eine dieser vorbestimmten Richtung im Wesentlichen entgegengesetzte Richtung umfasst. Mit anderen Worten beschreibt jedes vorgegebene Bewegungsprofil einen Bewegungsverlauf mit mindestens einem Richtungswechsel.

Indem jedes vorgegebene Bewegungsprofil zumindest einen Richtungswechsel aufweist, wird eine Fehlbetätigung des Schließelements des Fahrzeugs, z.B. durch eine zufällige Bewegung in nur einer Richtung, vorteilhafterweise vermieden.

Dabei wird der Erfassungsbereich, in welchem die Bewegung erfasst wird, dem Benutzer angezeigt oder signalisiert, wenn mehrfach eine Bewegung erfasst wird, welche nicht dem mindestens einen vorgegebenen Bewegungsprofil entspricht.

Durch die Anzeige des Erfassungsbereichs wird vorteilhafterweise vermieden, dass der Benutzer die Bewegung des Objektes (auch nur teilweise) außerhalb dieses Erfassungsbereiches ausführt.

Vorteilhafterweise wird die Bewegung des Objektes in dem Umgebungsbereich des Fahrzeugs nur dann erfasst, wenn gleichzeitig ein dem Fahrzeug zugeordneter Fahrzeugschlüssel oder ID-Geber in diesem Umgebungsbereich erfasst wird.

Dadurch werden vorteilhafterweise die entsprechenden Sensoren des Fahrzeugs nur dann mit Energie versorgt, wenn von dem Fahrzeug in dem entsprechenden Umgebungsbereich des Schließelements ein berechtigter Benutzer erfasst wird. Um allerdings eine Suche nach dem Fahrzeugschlüssel oder ID-Geber in dem Umgebungsbereich zu aktivieren, ist es meist üblich, zumindest einen die Bewegung des Objektes erfassenden Sensor ständig zu aktivieren. In diesem Fall werden die weiteren zur vollständigen Erfassung der Bewegung notwendigen Sensoren dann nur bei Bedarf aktiviert, wenn also z.B. der mindestens eine Sensor anspricht.

Das Schließelement des Fahrzeugs ist insbesondere eine Tür oder eine Klappe (z.B. eine Heckklappe) des Fahrzeugs. Die Betätigung des Schließelements entspricht insbesondere einem Öffnen des Schließelements, wenn das Schließelement geschlossen ist und einem Schließen des Schließelements, wenn das Schließelement geöffnet ist. Natürlich ist es auch denkbar, dass bei der Erfassung einer einem vorgegebenen Bewegungsprofil entsprechenden Bewegung des Objektes nicht nur ein, sondern mehrere Schließelemente des Fahrzeugs (beispielsweise alle Türen auf einer Seite des Fahrzeugs) betätigt werden.

Die Vorteile der erfindungsgemäßen Vorrichtung entsprechen im Wesentlichen den Vorteilen des erfindungsgemäßen Verfahrens und des weiteren erfindungsgemäßen Verfahrens, so dass hier auf eine Wiederholung verzichtet wird.

Im Folgenden wird die vorliegende Erfindung anhand bevorzugter erfindungsgemäßer Ausführungsformen mit Bezug zu den Figuren im Detail beschrieben.

In Fig. 1 ist ein erfindungsgemäßes Fahrzeug von hinten dargestellt, wobei ein Erfassungsbereich von Sensoren einem Benutzer kenntlich gemacht ist.

In Fig. 2 sind Signalverläufe von drei Sensoren bei der Erfassung einer Bewegung eines Objektes, welche einem vorgegebenen Bewegungsprofil entspricht, dargestellt.

In Fig. 3 sind bestimmte Charakteristika eines Signalverlaufs eines Sensors dargestellt.

In Fig. 4 sind Signalverläufe von drei Sensoren bei der Erfassung einer Bewegung eines Objektes, welches keinem vorgegebenen Bewegungsprofil entspricht, dargestellt.

Fig. 5 stellt schematisch ein erfindungsgemäßes Fahrzeug mit einer erfindungsgemäßen Vorrichtung dar.

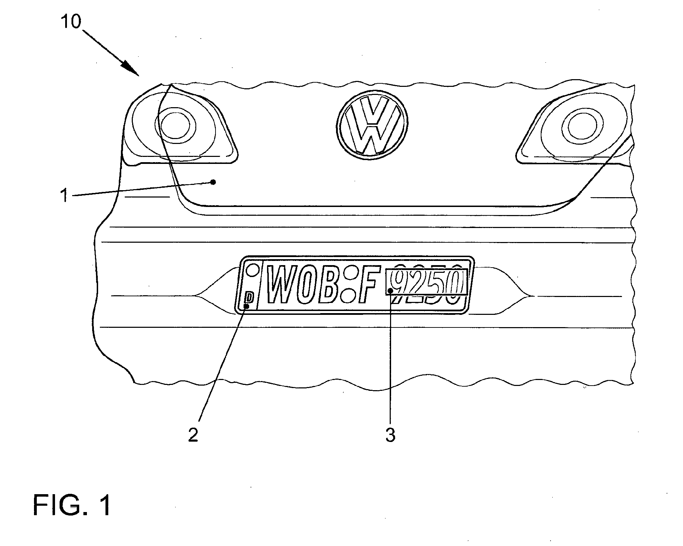

In Fig. 1 ist ein erfindungsgemäßes Fahrzeug 10 mit einer Heckklappe 1 dargestellt. Ein Benutzer des Fahrzeugs 10 kann die Heckklappe 1 öffnen, indem er hinter dem Fahrzeug 10 stehend eine Kickbewegung mit seinem Fuß in Richtung des Nummernschildes 2 des Fahrzeugs 10 ausführt.

Eine erfindungsgemäße Ausführungsform des Verfahrens zur Betätigung der Heckklappe 1 umfasst folgende Schritte.

### Schritt 1:

Mittels Sensoren (in Fig. 1 nicht dargestellt) wird die Fußbewegung erfasst und in ein Bewegungsprofil (Signalverläufe) umgewandelt.

### Schritt 2:

Dieses Bewegungsprofil wird mit abgespeicherten Bewegungsprofilen (darunter ein Default-Bewegungsprofil) verglichen. Entspricht das Bewegungsprofil bzw. die erfasste Fußbewegung einem der abgespeicherten Bewegungsprofile, wird die Heckklappe 1 geöffnet und das Verfahren endet.

### Schritt 3:

Entspricht das Bewegungsprofil keinem der abgespeicherten Bewegungsprofile wird das aktuell erfasste Bewegungsprofil temporär abgespeichert, sofern es zumindest eine gewisse Ähnlichkeit mit dem Default-Bewegungsprofil aufweist, und auf die Erfassung einer erneuten Fußbewegung gewartet. Sollte innerhalb einer vorbestimmten Zeit keine erneute Fußbewegung erfasst werden, wird das temporär abgespeicherte Bewegungsprofil gelöscht und das Verfahren endet.

### Schritt 4:

Erfolgt innerhalb der vorbestimmten Zeit eine erneute Fußbewegung, wird diese Fußbewegung von den Sensoren erfasst und abhängig von der erfassten Fußbewegung ein neues Bewegungsprofil angelegt. Dieses neue Bewegungsprofil wird mit dem temporär abgespeicherten Bewegungsprofil verglichen. Stimmt das neue Bewegungsprofil innerhalb von Toleranzgrenzen mit dem temporär abgespeicherten Bewegungsprofil überein, wird zum einen die Heckklappe 1 geöffnet und zum anderen das temporär abgespeicherte Bewegungsprofil dauerhaft abgespeichert. Das Verfahren endet. Stimmt das neue Bewegungsprofil nicht mit dem temporär abgespeicherten Bewegungsprofil überein, wird ein Lichtbalken 3 auf dem Kennzeichen 2 für eine bestimmte Zeitspanne projiziert, wird das temporär abgespeicherte Bewegungsprofil gelöscht und das Verfahren setzt bei Schritt 2 fort.

Sollten alle Speicherplätze zur dauerhaften Abspeicherung des temporär abgespeicherten Bewegungsprofils belegt sein, wird dasjenige Bewegungsprofil gelöscht, welches innerhalb einer vorbestimmten Zeitspanne am wenigsten oft benutzt wurde bzw. am wenigsten oft der jeweils erfassten Fußbewegung entsprach. Dazu weist jedes abgespeicherte Bewegungsprofil einen Zähler auf, welcher jeweils hoch gezählt wird, wenn das entsprechende Bewegungsprofil der erfassten Fußbewegung entspricht. Das Default-Bewegungsprofil wird dabei niemals gelöscht (und besitzt daher auch keinen Zähler).

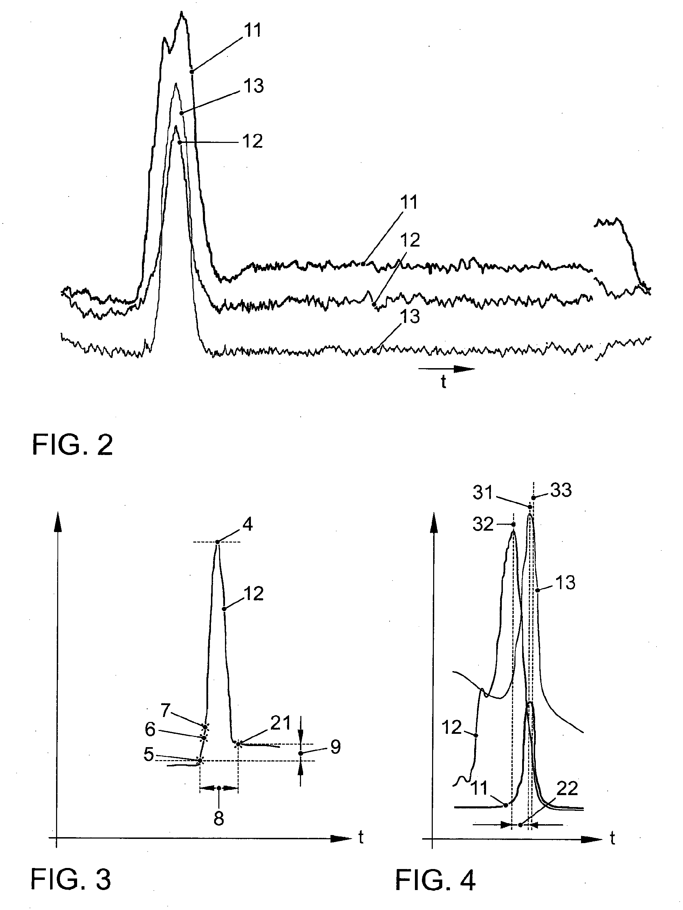

In Fig. 2 sind drei Signalverläufe 11-13 dargestellt, welche von optischen Sensoren bei einer als korrekt eingestuften Fußbewegung erfasst werden. Während auf der x-Achse die Zeit t dargestellt ist, repräsentiert die y-Achse die Einheit mV, was für alle drei Figuren 2-4 gilt. Die Stärke der Ausgabe der Sensoren ist damit proportional zum Reflektionsgrad eines sich annähernden Objektes, so dass die auf der y-Achse dargestellten Werte einer Intensität der vom Fuß reflektierten Strahlung entsprechen. Die Stärke der Ausgabe der Sensoren kann dabei den Abstand des entsprechenden Objektes (des Fußes) von dem jeweiligen Sensor repräsentieren; dies muss aber erfindungsgemäß nicht der Fall sein.

Zur Erfassung der Fußbewegung existieren bei der dargestellten Ausführungsform drei LEDs, welche entlang der Breitenrichtung des Fahrzeugs 10 unterhalb der Heckklappe 1 (z.B. im Heckdiffusor) angeordnet sind. Das von diesen drei LEDs abgestrahlte Licht wird von dem sich bewegenden Objekt (Fuß) reflektiert und von einer Fotodiode (Teil des Sensors) empfangen. In der Fig. 2 (und auch in den Figuren 3 und 4) entspricht der Signalverlauf 11 der Intensität der vom Fuß reflektierten Strahlung der linken LED, der Signalverlauf 12 der Intensität der vom Fuß reflektierten Strahlung der mittleren LED und der Signalverlauf 13 der Intensität der vom Fuß reflektierten Strahlung der rechten LED. Man erkennt, dass die Maxima der drei Signalverläufe 11-13 in Fig. 2 nahezu zum selben Zeitpunkt auftreten, was ein Kriterium dafür ist, dass es sich bei der entsprechenden Fußbewegung um eine als gültig erachtete Bewegung handelt.

In Fig. 3 sind bestimmte Merkmale eines Signalverlaufs 12 über der Zeit t dargestellt. Mit dem Bezugszeichen 5 ist der Anstiegsstart gekennzeichnet, welchem ein erster Anstiegspunkt 6 und ein zweiter Anstiegspunkt 7 folgen. Die Steigung der durch den ersten Anstiegspunkt 6 und den zweiten Anstiegspunkt 7 definierten Gerade ist ebenfalls ein Merkmal des Signalverlaufs 12. Weitere Merkmale des Signalverlaufs 12 sind das Maximum 4 des Signalverlaufs 12 und die so genannte Kickzeit 8, welche zwischen dem Anstiegsstart 5 und dem Ende des Kicks 21 verstreicht. Die Differenz bzw. der Höhenunterschied 9 zwischen dem y-Wert des Anstiegstarts 5 und des Ende des Kicks 21 gibt an, an welcher Stelle sich der Fuß zu Beginn des Kicks und am Ende des Kicks auffällt.

Durch eine entsprechende Festlegung dieser Merkmale wird eine Anzahl von gültigen Bewegungen des Objektes (in diesem Fall des Fußes) als eine Art Hüllkurve in einem Speicher abgelegt. Diese Hüllkurve entspricht dabei dem Default-Bewegungsprofil, welches den optimalen und vorgegebenen Bewegungsablauf des Objektes als möglichen Signalverlauf innerhalb bestimmter Parametergrenzen definiert.

In Fig. 4 sind die drei Signalverläufe 11-13 für den Fall dargestellt, dass eine Person hinten an der Heckklappe 1 vorbei läuft. Mit anderen Worten repräsentieren die Signalverläufe 11-13 in Fig. 4 kein gültiges Bewegungsprofil. Man erkennt dies am besten an der zeitlichen Lage 31-33 der Maxima der Signalverläufe 11-13, da der zeitliche Abstand 22 dieser Maxima wesentlich größer als bei den Signalverläufen 11-13 in Fig. 2 ist.

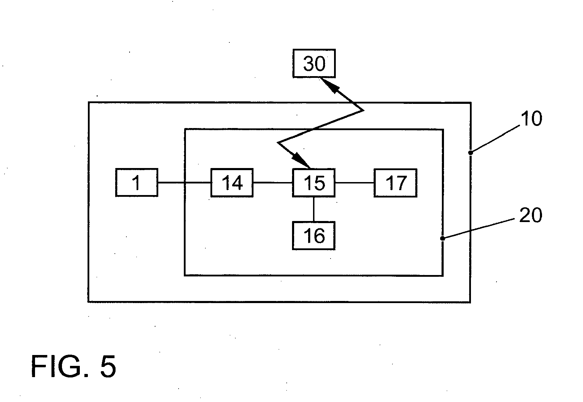

In Fig. 5 ist schematisch ein erfindungsgemäßes Fahrzeug mit einer erfindungsgemäßen Vorrichtung 20 und mit einer Heckklappe 1 dargestellt. Die erfindungsgemäße Vorrichtung 20 umfasst neben einem Steuergerät 15 einen Mechanismus 14 zur Betätigung (d.h. zum Öffnen und zum Schließen) der Heckklappe 1, einen Speicher 16 zur Speicherung von vorgegebenen Bewegungsprofilen und einen oder mehrere Sensoren 17. Wenn das Steuergerät 15 einen für das Fahrzeug 10 berechtigten ID-Geber 30 in der Nähe der Heckklappe 1 erfasst, aktiviert es den oder die Sensoren 17, um gültige Fußbewegungen zur Betätigung der Heckklappe 1 zu erfassen.

## Patentansprüche

1. Verfahren zur automatischen Betätigung eines Schließelements (1) eines Fahrzeugs (10), wobei eine Bewegung eines Objektes in einem Umgebungsbereich des Fahrzeugs (10) mit mindestens einem Sensor (17) erfasst wird,
wobei, wenn der zeitliche Verlauf (11-13) einer Ausgabe des mindestens einen Sensors (17) innerhalb von Toleranzgrenzen einem zeitlichen Verlauf mindestens eines vorgegebenen Bewegungsprofils entspricht, das Schließelement (1) automatisch betätigt wird, und wobei ein Erfassungsbereich, in welchem die Bewegung erfasst wird, angezeigt wird, wenn mehrfach eine Bewegung erfasst wird, welche jeweils nicht dem mindestens einen vorgegebenen Bewegungsprofil entspricht.

2. Verfahren nach Anspruch 1, **dadurch gekennzeichnet, dass** jedes des mindestens einen Bewegungsprofils eine erste Bewegung des Objektes in eine vorbestimmte Richtung und eine zweite Bewegung des Objektes in eine der vorbestimmten Bewegung im Wesentlichen entgegengesetzte Richtung umfasst.

3. Verfahren nach Anspruch 1 oder 2, **dadurch gekennzeichnet, dass** die Bewegung des Objektes in dem Umgebungsbereich nur erfasst wird, wenn gleichzeitig ein dem Fahrzeug (10) zugeordneter Fahrzeugschlüssel (30) in dem Umgebungsbereich erfasst wird.

4. Verfahren nach einem der vorhergehenden Ansprüche,
**dadurch gekennzeichnet,**
**dass** das Schließelement eine Tür oder eine Klappe (1) des Fahrzeugs (10) ist, und
**dass** die Betätigung des Schließelements (1) ein Öffnen des Schließelements (1) ist, wenn das Schließelement (1) geschlossen ist, und ein Schließen des Schließelements (1) ist, wenn das Schließelement (1) geöffnet ist.

5. Vorrichtung zur Betätigung eines Schließelements (1) eines Fahrzeugs (10),
wobei die Vorrichtung (20) einen Mechanismus (14) zur Betätigung des Schließelements (1), ein Steuergerät (15), einen Speicher (16) und mindestens einen Sensor (17) umfasst, wobei die Vorrichtung (20) derart ausgestaltet ist,
dass das Steuergerät (15) mit Hilfe des mindestens einen Sensors (17) eine Bewegung eines Objektes in einem Umgebungsbereich des Fahrzeugs (10) erfasst,
dass das Steuergerät (15) den Mechanismus (14) zur Betätigung des Schließelements (1) ansteuert, wenn das Steuergerät (15) erkennt, dass ein zeitlicher Verlauf (11-13) einer Ausgabe des mindestens einen Sensors (17) einem zeitlichen Verlauf mindestens eines in dem Speicher (16) gespeicherten Bewegungsprofils entspricht, und
dass die Vorrichtung (20) einen Erfassungsbereich, in welchem die Bewegung erfasst wird, anzeigt, wenn das Steuergerät (15) mit Hilfe des mindestens einen Sensors (17) mehrfach eine Bewegung erfasst, welche jeweils nicht dem mindestens einen vorgegebenen Bewegungsprofil entspricht.

6. Vorrichtung nach Anspruch 5, **dadurch gekennzeichnet, dass** die Vorrichtung (20) zur Durchführung des Verfahrens nach einem der Ansprüche 2-4 ausgestaltet ist.

7. Fahrzeug mit einem Schließelement (1) und mit einer Vorrichtung (20) nach Anspruch 5 oder 6.

## Claims

1. Method for automatically actuating a locking element (1) of a vehicle (10),
wherein a movement of an object in a surrounding area of the vehicle (10) is detected by at least one sensor (17),
wherein the locking element (1) is automatically actuated if the temporal profile (11-13) of an output of the at least one sensor (17) corresponds to a temporal profile of at least one predefined movement profile within tolerance limits, and
wherein a detection area in which the movement is detected is displayed if a movement which does not respectively correspond to the at least one predefined movement profile is repeatedly detected.

2. Method according to Claim 1, **characterized in that** each of the at least one movement profile comprises a first movement of the object in a predetermined direction and a second movement of the object in a direction which is substantially opposite the predetermined movement.

3. Method according to Claim 1 or 2, **characterized in that** the movement of the object in the surrounding area is detected only when a vehicle key (30) assigned to the vehicle (10) is detected in the surrounding area at the same time.

4. Method according to one of the preceding claims, **characterized**
**in that** the locking element is a door or a tailgate (1) of the vehicle (10), and
**in that** the actuation of the locking element (1) is opening of the locking element (1) when the locking element (1) is locked and locking of the locking element (1) when the locking element (1) is open.

5. Apparatus for actuating a locking element (1) of a vehicle (10),
the apparatus (20) comprising a mechanism (14) for actuating the locking element (1), a control device (15), a memory (16) and at least one sensor (17),
the apparatus (20) being configured in such a manner that
the control device (15) detects a movement of an object in a surrounding area of the vehicle (10) with the aid of the at least one sensor (17),
the control device (15) drives the mechanism (14) for actuating the locking element (1) if the control device (15) recognizes that a temporal profile (11-13) of an output of the at least one sensor (17) corresponds to a temporal profile of at least one movement profile stored in the memory (16), and
the apparatus (20) displays a detection area in which the movement is detected if the control device (15), with the aid of the at least one sensor (17) repeatedly detects a movement which does not respectively correspond to the at least one predefined movement profile.

6. Apparatus according to Claim 5, **characterized in that** the apparatus (20) is configured to carry out the method according to one of Claims 2-4.

7. Vehicle having a locking element (1) and having an apparatus (20) according to Claim 5 or 6.

## Revendications

1. Procédé d'actionnement automatique d'un élément de fermeture (1) d'un véhicule (10),
dans lequel un mouvement d'un objet dans une zone environnante du véhicule (10) est détecté par au moins un capteur (17),
dans lequel l'élément de fermeture (1) est actionné de manière automatique lorsque le tracé dans le temps (11-13) d'une sortie de l'au moins un capteur (17), à l'intérieur d'une marge de tolérance, correspond à un tracé dans le temps d'au moins un profil de mouvement prédéfini, et
dans lequel une zone de détection, dans laquelle le mouvement est détecté, est affichée lorsqu'un mouvement qui ne correspond pas à l'au moins un profil de mouvement prédéfini est détecté plusieurs fois.

2. Procédé selon la revendication 1, **caractérisé en ce que** chacun des au moins un profil de mouvement englobe un premier mouvement de l'objet dans une direction prédéfinie et un deuxième mouvement de l'objet dans une direction pour l'essentiel opposée au mouvement prédéfini.

3. Procédé selon la revendication 1 ou 2, **caractérisé en ce que** le mouvement de l'objet dans la zone environnante n'est détecté que si une clé de véhicule (30) associée au véhicule (10) est détectée simultanément dans la zone environnante.

4. Procédé selon l'une des revendications précédentes, **caractérisé en ce**
**que** l'élément de fermeture est une porte ou une trappe (1) du véhicule (10) et
**que** l'actionnement de l'élément de fermeture (1) est une ouverture de l'élément de fermeture (1) lorsque l'élément de fermeture (1) est fermé et une fermeture de l'élément de fermeture (1) lorsque l'élément de fermeture (1) est ouvert.

5. Dispositif d'actionnement d'un élément de fermeture (1) d'un véhicule (10), le dispositif (20) comprenant un mécanisme (14) destiné à actionner l'élément de fermeture (1), un contrôleur (15), une mémoire (16) et au moins un capteur (17), le dispositif (20) étant configuré de telle sorte
que le contrôleur (15) détecte à l'aide de l'au moins un capteur (17) un mouvement d'un objet dans une zone environnante du véhicule (10),
que le contrôleur (15) commande le mécanisme (14) destiné à actionner l'élément de fermeture (1) lorsque le contrôleur (15) identifie qu'un tracé dans le temps (11-13) d'une sortie de l'au moins un capteur (17) correspond à un tracé dans le temps d'au moins un profil de mouvement enregistré dans la mémoire (16), et que le dispositif (20) affiche une zone de détection dans laquelle le mouvement est détecté, lorsque le contrôleur (15), à l'aide de l'au moins un capteur (17), détecte plusieurs fois un mouvement qui ne correspond respectivement pas à l'au moins un profil de mouvement prédéfini.

6. Dispositif selon la revendication 5, **caractérisé en ce que** le dispositif (20) est configuré pour mettre en oeuvre le procédé selon l'une des revendications 2 à 4.

7. Véhicule équipé d'un élément de fermeture (1) et d'un dispositif (20) selon la revendication 5 ou 6.
